# FASCICULE DE BREVET EUROPEEN

(11) **EP 3 918 278 B1**
(45) Date de publication et mention de la délivrance du brevet: **09.09.2026**
(21) Numéro de dépôt: 20705249.9
(22) Date de dépôt: 28.01.2020
(51) Int. Cl.: G01C 21/00, G01C 21/20, G08G 5/00, B64C 39/02, B64U 10/14, B64U 20/87, G05D 1/242, G05D 1/243, G05D 1/247, G05D 1/467, G05D 107/70, G05D 109/25, G05D 111/10, G05D 111/63, G05D 111/67

(54) **PROCEDE DE LOCALISATION**
ORTUNGSVERFAHREN
LOCATING METHOD

(30) Priorité: 28.01.2019 FR 1900750
(43) Date de publication de la demande: 08.12.2021
(73) Titulaire: Hardis Groupe, 38170 Seyssinet-Pariset (FR); Delair, 31670 Labège (FR)
(72) Inventeur: COLAS, Charles, 38000 GRENOBLE (FR); AVANZINI, Pierre, 38340 VOREPPE (FR)
(74) Mandataire: Plasseraud IP
(86) Numéro de dépôt international: PCT/FR2020/050127
(87) Numéro de publication internationale: WO 2020/157425

(56) Documents cités:
- DOBREV YASSEN ET AL: "An Indoor Positioning System Based on Wireless Range and Angle Measurements Assisted by Multi-Modal Sensor Fusion for Service Robot Applications", IEEE ACCESS, vol. 6, 1 November 2018 (2018-11-01), pages 69036 - 69052, XP011703943, DOI: 10.1109/ACCESS.2018.2879029

## Description

### DOMAINE DE L'INVENTION ET ETAT DE LA TECHNIQUE

L'invention se rapporte au domaine de la localisation et de la navigation d'un engin.

Il est connu que pour contrôler un engin, tel que par exemple un drone volant, un véhicule mobile à roues ou un engin flottant, et à fortiori effectuer des tâches automatisées de navigation, il est nécessaire de pouvoir localiser l'engin dans son environnement.

D'une manière générale, la localisation pour ce type d'engin est effectuée en combinant des données de capteurs proprioceptifs, alimentant un modèle d'évolution, avec des données de capteurs extéroceptifs fournissant des données de localisation brutes. Cela se traduit en général par l'utilisation d'une centrale inertielle (ou d'odomètres dans le cas d'un véhicule mobile à roues) faisant office de capteurs proprioceptifs, et d'une localisation brute donnée conjointement par un dispositif de type « Global Positionning System », calculant la position et la vitesse de l'engin et de magnétomètres qui permettent de déterminer le lacet de l'engin (i. e. son orientation autour d'un axe vertical).

Malheureusement, en milieu intérieur l'utilisation d'un GPS est impossible car les signaux sont masqués (ou au mieux fortement détériorés). De même l'utilisation de magnétomètres est inopérante car l'environnement magnétique peut être fortement perturbé.

Plusieurs alternatives ont été envisagées pour faire naviguer un engin en milieu intérieur.

La méthode la plus classique consiste à utiliser une centrale inertielle de précision, i.e. un ensemble d'accéléromètres et de gyroscopes suffisamment fiables pour permettre d'en déduire une localisation. Cependant, les centrales inertielles de précision sont volumineuses, lourdes et chères (et donc inadaptées à des drones légers). En outre, si elle est embarquée sur un engin de type drone, la centrale inertielle sera particulièrement sensible aux vibrations provoquées par le déplacement de l'engin, générant une dérive rédhibitoire dans l'estimation de la localisation.

Une autre méthode, spécialement adaptée aux drones légers consiste à utiliser un dispositif combinant gyroscope, capteur d'altitude et caméra orientée vers le sol, appelé par la suite capteur de flux optique. Ce dernier retourne une vitesse de déplacement dans le plan normal à l'axe optique de la caméra (généralement le plan du sol) avec une précision qui dépend notamment de l'altitude de l'engin et de l'angle de vue de la caméra.

Cependant, on constate que l'utilisation d'un capteur de flux optique ne permet pas d'obtenir les performances d'asservissement, pour des opérations "fines", requises dans le cadre d'une navigation dans des allées logistiques. En effet, une précision inférieure à 10cm et 0.05m/s est requise respectivement pour la position de l'engin et sa vitesse afin de scanner les codes-barres de produits stockés dans un entrepôt :
- le capteur mesure des vitesses dans le plan horizontal et ne permet pas de recaler la position de l'engin qui finit par dériver dans le temps
- l'objectif de la caméra est choisi pour donner de bons résultats à une altitude donnée. Les allées logistiques sont généralement hautes (plus de dix mètres de haut) et il n'est pas possible d'obtenir des estimations de vitesse précises sur l'ensemble de cet intervalle d'altitude en gardant la même optique.

Une autre solution consiste à équiper l'espace de navigation avec des balises qui peuvent fournir soit des informations de distances (communication radio avec l'engin par exemple), soit des informations déduites de leur perception par l'engin qui est alors équipé d'un capteur approprié (par exemple une caméra s'il s'agit d'une balise visuelle). En principe, la localisation est d'autant meilleure que les balises sont bien réparties dans l'espace de navigation.

Le principal défaut de cette solution est qu'elle nécessite d'équiper l'environnement et d'estimer précisément au préalable la position des balises. Aussi, dans le cas d'une navigation dans une allée logistique, les balises seraient confinées dans un couloir et l'écartement de l'engin par rapport aux cloisons (i. e. le positionnement par rapport à un axe transversal normal aux cloisons) ne serait pas précis.

Une autre solution passe par l'élaboration d'une carte de l'environnement. Cela peut se faire en amont ou en cours de navigation (on parle alors de SLAM, « Simultaneous Localization And Mapping »). Cette méthode nécessite de traiter une grande quantité d'informations (images, nappes laser, etc..), et requiert d'embarquer une capacité de calcul importante et ne garantit pas le niveau de précision de la représentation de l'environnement ainsi générée. La carte qui en résulte a ensuite vocation à être stockée et réutilisée lors de navigations ultérieures afin de localiser l'engin. Or, dans le cas d'une navigation dans une allée logistique, l'environnement change régulièrement (déplacement de palettes) et se répète (beaucoup de palettes / structures identiques). Ainsi il n'est pas garanti que la carte soit toujours pertinente à des fins de localisation une fois que l'environnement a été modifié. L'intérêt de disposer d'une carte semble donc limité à la vue des contraintes exigées.

Le document DOBREV et al., " An Indoor Positioning System Based on Wireless Range and Angle Measurements Assisted by Multi-Modal Sensor Fusion for Service Robot Applications", publié le 1/11/2018, décrit un procédé de localisation d'un robot. Le procédé met en œuvre quatre éléments : une borne radar fixe (static radar node), un node radar mobile (mobile radar node), un capteur de détection de mur (wall-detection sensor), et un système d'odométrie du robot mobile (mobile robot odometry). Chaque élément a son propre repère de localisation. D1 définit un repère global (fglo, x, y, z), fixe par rapport à une paroi (montré en jaune sur la figure 4, en noir sur les figures 8 et 9), défini lors de l'initialisation (paragraphe G, page 12/17). Comme expliqué en lien avec la figure 12, le procédé de D1 fusionne les données des différents éléments dans leurs repères respectifs pour localiser le robot dans le repère global. Ainsi, ce procédé est relativement complexe à mettre en œuvre.

### PRESENTATION GENERALE DE L'INVENTION

Dans ce contexte, la présente invention a pour objectif de fournir un procédé de localisation pour un engin à proximité d'une paroi, qui permette de positionner précisément l'engin par rapport à la paroi et par rapport à une borne fixe déposée de manière arbitraire dans l'espace de navigation, pour qu'il puisse réaliser des opérations précises telles que scanner des codes-barres, sans utiliser des éléments onéreux.

Selon un premier aspect, l'invention concerne un procédé de localisation pour un engin évoluant à proximité d'une paroi, un repère de localisation, définit au point de projection de l'engin sur la paroi comprenant un axe longitudinal horizontal et tangent à la paroi, un axe vertical et un axe transversal étant défini de sorte que le repère soit orthonormé direct. Le procédé comprend la localisation selon l'axe transversal en fonction de mesures d'une distance entre l'engin et la paroi fournie par au moins un capteur de distance transversale de l'engin, et la localisation selon l'axe longitudinal en fonction de mesures d'une distance entre l'engin et une borne fixe fournie par au moins un capteur de distance longitudinale de l'engin.

L'utilisation d'une telle représentation de la localisation, liée à la paroi permet très avantageusement de garantir un positionnement précis en s'affranchissant d'un calcul de déplacement relatif, où la localisation serait obtenue à chaque instant en estimant le mouvement effectué depuis la précédente localisation, et qui serait naturellement sujette à un phénomène de dérive induit par des accumulations d'erreurs. En effet, la paroi est un repère tangible, fiable et sensiblement immobile. Ainsi, contrairement aux dispositifs connus qui s'appuient uniquement sur une estimation de déplacement relatif de l'engin, le procédé selon l'invention permet de localiser simplement et précisément un engin, par rapport à la paroi et à une borne fixe déposée de manière arbitraire dans l'espace de navigation.

Ainsi, le procédé selon l'invention permet de localiser l'engin en fonction de données fiables collectées par des capteurs extéroceptifs fournissant des mesures dans le repère lié à la paroi.

Ainsi, l'invention propose un procédé de localisation pour un engin à proximité d'une paroi, qui permet de positionner précisément l'engin par rapport à la paroi et à une borne fixe, pour qu'il puisse réaliser des opérations de précision telles que scanner des codes-barres, sans utiliser des éléments onéreux et complexes.

Le procédé de localisation peut comprendre en outre la localisation selon l'axe vertical en fonction de mesures d'altitude fournie par des moyens de mesure d'altitude de l'engin et / ou des mesures de distance verticales avec le plafond fournies par des moyens de mesure de distance verticale.

Le procédé de localisation peut comprendre en outre la détermination d'une orientation de l'engin relativement à la paroi selon l'axe vertical en comparant les mesures de distance entre l'engin et la paroi fournis par au moins deux mesures de distance transversale de l'engin obtenues à des positions différentes ou selon des orientations différentes.

Chaque mesure de distance transversale peut être obtenue à l'aide d'un sonar ou d'un laser ou d'une caméra de profondeur.

Ledit au moins un capteur de distance longitudinale peut être un capteur ultra large bande ou un système de mesure de temps de vol communiquant avec ladite borne fixe.

Les moyens de mesure d'altitude de l'engin peuvent comprendre au moins un capteur de distance verticale mesurant la distance entre l'engin et le sol et / le plafond, et / ou un baromètre.

La localisation selon un axe parmi l'axe transversal, l'axe longitudinal ou l'axe vertical peut être également en fonction de données inertielles fournies par une centrale inertielle de l'engin.

La localisation suivant une paire d'axes parmi l'axe transversal, l'axe longitudinal ou l'axe vertical peut être également en fonction de données visuelles fournies par une caméra de l'engin, de type capteur de flux optique.

L'engin peut évoluer à proximité d'au moins deux parois en vis à vis dont une première paroi et une deuxième paroi, la localisation selon l'axe transversal étant en fonction de mesures de distance entre l'engin et la première paroi fournies par au moins un premier capteur de distance transversale de l'engin, et / ou de mesures de distance entre l'engin et la deuxième paroi fournies par au moins un deuxième capteur de distance transversale de l'engin.

L'engin peut évoluer sous une paroi en vis-à-vis d'un sol, formant un plafond, la localisation selon l'axe vertical étant en fonction de mesures d'altitude fournie par des moyens de mesure d'altitude de l'engin et / ou des mesures de distance verticales avec le plafond fournies par des moyens de mesure de distance verticale.

Selon un autre aspect l'invention concerne un procédé de navigation pour un engin qui comprend la localisation de l'engin selon l'invention, et la génération d'une commande de déplacement de l'engin.

Ladite commande de déplacement peut comprendre une correction d'orientation de l'engin pour avoir uniquement des déplacements en translation.

Selon un autre aspect, l'invention concerne un engin adapté pour mettre en œuvre un procédé selon l'invention.

L'engin peut être choisi parmi un drone volant, un véhicule mobile à roues, ou un engin mobile flottant.

Selon un autre aspect, l'invention concerne un produit programme d'ordinateur comprenant des instructions de code pour l'exécution d'un procédé de localisation selon l'invention et / ou l'exécution d'un procédé de navigation selon l'invention, pour permettre la localisation et / ou la navigation d'un engin lorsque le programme est exécuté sur un ordinateur.

Selon un autre aspect, l'invention concerne un moyen de stockage lisible par un équipement informatique sur lequel un produit programme d'ordinateur comprend des instructions de code pour l'exécution d'un procédé de localisation selon l'invention et/ou l'exécution d'un procédé de navigation selon l'invention.

### DESCRIPTION DES FIGURES

D'autres caractéristiques et avantages de l'invention ressortiront encore de la description qui suit, laquelle est purement illustrative et non limitative, et doit être lue en regard des figures annexées sur lesquelles :

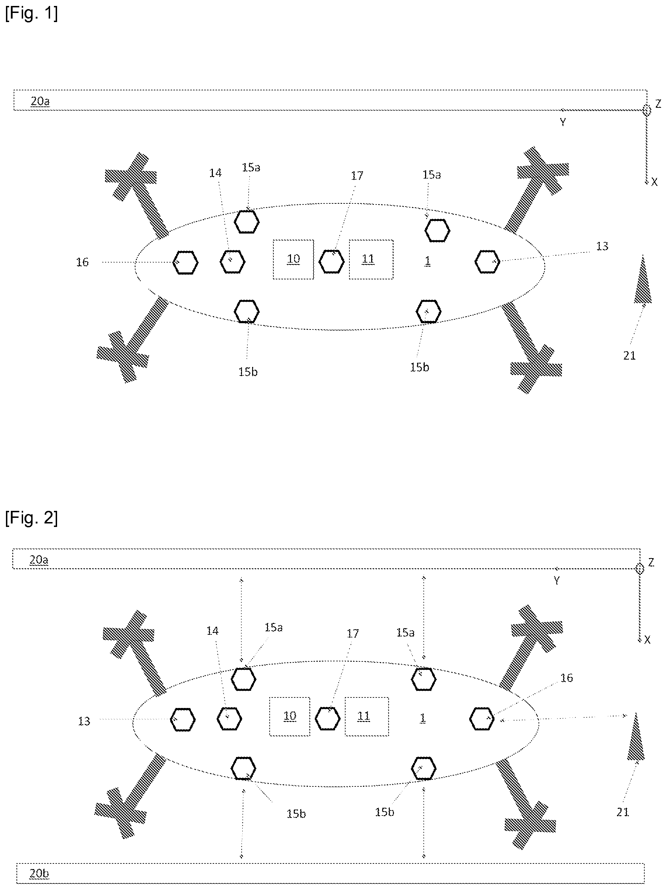

La Figure 1 représente un schéma d'un engin selon l'invention, le long d'une paroi ;
La Figure 2 représente un schéma d'un engin selon l'invention, entre deux parois ;

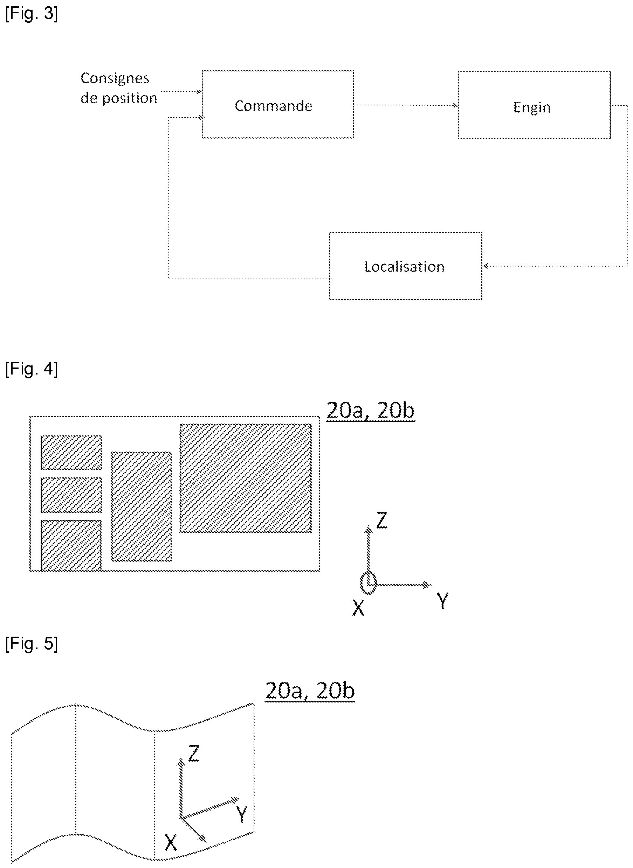

La Figure 3 représente un schéma bloc d'un procédé de navigation selon l'invention ;
La Figure 4 est une représentation schématique de différentes géométries et configurations de parois.
La Figure 5 est une représentation schématique de différentes géométries et configurations de parois.

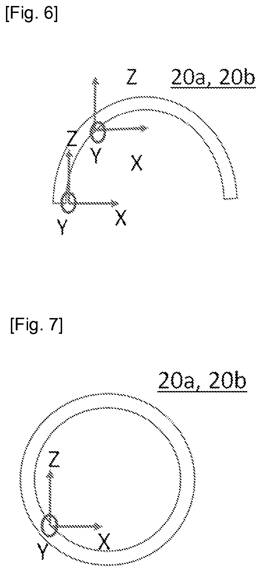

La Figure 6 est une représentation schématique de différentes géométries et configurations de parois.
La Figure 7 est une représentation schématique de différentes géométries et configurations de parois.

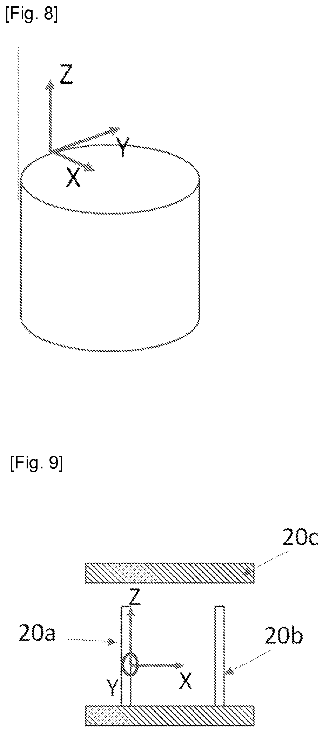

La Figure 8 est une représentation schématique de différentes géométries et configurations de parois.
La Figure 9 est une représentation schématique de différentes géométries et configurations de parois.

### DESCRIPTION DETAILLEE DE L'INVENTION

### Environnement

L'invention concerne la localisation et la navigation d'un engin 1 en intérieur, à proximité d'une paroi 20a ou 20b, ou entre plusieurs parois 20a et 20b.

Typiquement, l'environnement dans lequel évolue l'engin 1 peut être un entrepôt logistique comprenant une pluralité d'allées. Chaque allée est délimitée par au moins une paroi 20a, 20b verticale, c'est-à-dire s'élevant de façon plus ou moins plane et régulière par rapport à une surface formant un sol, et éventuellement par un plafond 20c en vis-à-vis du sol (cf. figure 8). La paroi 20a, 20b peut être définie, par exemple, par un mur ou par une étagère

Il est précisé que, tel que représenté sur les figures 4 à 9, la paroi 20a, 20b, peut présenter des géométries variées. Ainsi, la parois 20a, 20b, peut par exemple être une structure verticale ajourée, telle qu'une étagère d'un entrepôt logistique (cf. figure 4). En référence à la figure 5, la paroi 20a, 20b, peut présenter des courbes et des ondulations. Tel que représenté sur les figures 6 à 8 la paroi 20a, 20b peut être sensiblement hémicylindrique ou cylindrique, dans le cas par exemple d'un tunnel (routier, ferroviaire, de métro, etc.), d'un conduit (par exemple d'égout), d'un silo ou d'une carlingue d'avion. Bien entendu, ces exemples sont non limitatifs et servent uniquement à illustrer la variété de géométries possibles de la paroi 20a, 20b.

Ladite paroi 20a, 20b définit un repère, au point de projection de l'engin 1 sur la paroi 20a, 20b, avec un axe longitudinal Y, horizontal et tangent à la paroi 20a, 20b, un axe vertical Z, et un axe transversal X de sorte que le repère soit orthonormé direct. Ce repère est représenté sur les figures 1 à 2 et 4 à 9.

On comprendra donc que dans ce repère, dans l'exemple d'une allée logistique, une progression longitudinale est une progression dans l'allée, le long de la paroi 20a, 20b. Une progression verticale est une variation d'altitude et une progression transversale consiste en un éloignement ou un rapprochement avec la paroi 20a, 20b.

Comme l'on verra plus loin, il peut y avoir deux parois 20a et 20b parallèles (typiquement le cas d'une allée logistique ou d'un tunnel), et il suffit alors que l'engin évolue entre les parois 20a, 20b (cela revient à évoluer le long de chacune des deux parois 20a, 20b) dans un espace de perception définit par des capteurs.

En outre, le repère orthogonal utilisé correspondant au point de projection de l'engin 1 sur la paroi 20a, 20b, est un repère glissant (dit repère de Frenet). Par repère glissant, il est entendu que le repère n'est pas fixe dans l'espace mais est déplacé en fonction des mouvements de l'engin 1. Typiquement, tel que cela sera détaillé ci-après le repère de Frenet est ici déplacé le long de la paroi 20a, 20b, de sorte que localement, l'engin 1 soit toujours normal à l'axe X.

### Engin

D'une manière préférée, l'engin 1 est un engin volant, de type drone. On comprend qu'un tel engin est mobile selon six degrés de liberté (trois degrés de liberté en position selon les trois axes X, Y et Z, et trois degrés de liberté en rotation autour des axes X, Y et Z).

Selon d'autres modes de réalisation, l'engin 1 pourrait être un véhicule mobile à roues, dans ce cas il ne serait pas piloté selon l'axe vertical Z. Le présent procédé est adapté à tout engin 1 destiné à évoluer le long de la paroi 20a, 20b, c'est-à-dire à rester à proximité de cette paroi.

D'une manière connue, un engin 1 de type drone peut comprendre un ensemble de moteurs et hélices permettant de voler et de se déplacer dans les multiples directions de l'espace. L'engin 1 peut, par exemple, comprendre quatre ou six hélices. Ces configurations connues permettent de garantir à la fois une bonne stabilité et une bonne maniabilité de l'engin 1. En outre, l'engin 1 est préférentiellement alimenté à l'énergie électrique et embarque donc une ou plusieurs batteries.

En sus, l'engin peut comprendre une unité de commande 10 et une centrale inertielle 11 comprenant, de manière standard, trois gyromètres mesurant les trois composantes d'un vecteur vitesse angulaire (il est à noter que de manière conventionnelle on parle de roulis pour définir la rotation autour de l'axe transversal X, de tangage pour définir la rotation autour de l'axe longitudinal Y et de lacet pour définir une rotation autour de l'axe vertical Z). De plus, la centrale inertielle 11 comprend trois accéléromètres mesurant les trois composantes d'un vecteur force spécifique selon les trois axes X, Y et Z. On rappelle que la force spécifique correspond à la somme des forces extérieures. En outre, l'engin 1 comprend des moyens de mesure d'altitude 13, 14, qui peuvent avantageusement comprendre un capteur de distance verticale 13, pour mesurer la distance selon l'axe vertical Z (avec le sol et/ou le plafond 20c) et/ou un baromètre 14. Tel que cela sera détaillé ci-après, le capteur de distance verticale 13 et le baromètre 14 peuvent avantageusement être combinés de façon à avoir une détermination redondante de l'altitude, ou peuvent être utilisés indépendamment l'un de l'autre. Avantageusement, tel que cela sera décrit ultérieurement, on peut combiner l'utilisation du capteur de distance verticale 13 avec un capteur de flux optique 17.

L'engin 1 comprend au moins un capteur de distance transversale 15a, 15b adapté pour mesurer une distance selon l'axe transversal X. D'une manière préférentielle ce capteur est un sonar. Avantageusement, tel que cela sera décrit ultérieurement, on peut combiner l'utilisation du capteur de distance transversale 15a, 15b avec un capteur de flux optique 17. 15a et 15b définissent respectivement des capteurs sur un flanc ou l'autre de l'engin 1, i.e. destinés à la mesure de distance avec une paroi « à gauche » ou « à droite ». On comprendra que, par commodité, il est préférable que chaque engin comprenne des capteurs 15a, 15b des deux côtés, mais il est possible que seuls ceux d'un côté (le côté de la paroi 20a, 20b) soient utilisés. Chaque capteur 15a, 15b est préférentiellement un sonar.

D'une manière particulièrement avantageuse, l'engin 1 comprend plusieurs capteurs de distance transversale 15a et/ou 15b du même côté. Tel que cela sera précisé ci-après, cette disposition permet de mesurer le lacet de l'engin 1, i. e. son orientation par rapport à la paroi 20a, 20b autour de l'axe vertical Z.

Avantageusement, tel que cela sera décrit ultérieurement, on peut combiner l'utilisation du capteur de distance transversale 15a, 15b avec un capteur de flux optique 17. L'engin 1 comprend un capteur de distance longitudinale 16 adapté pour mesurer la position sur l'axe longitudinal Y. Ledit capteur de distance longitudinale 16 peut être un capteur ultra large bande (Ultra Wide Band - UWB- en anglais). Selon une disposition préférée, le capteur ultra large bande communique avec une ou plusieurs bornes fixes 21. Par exemple, dans le cas d'une navigation dans une allée logistique, on peut avoir une borne à chaque extrémité de l'allée. Dans le cas d'un tunnel, on peut par exemple disposer des bornes 21 à intervalle réguliers.

Avantageusement, tel que cela sera décrit ultérieurement, on peut combiner l'utilisation du capteur de distance longitudinale 16 avec un capteur de flux optique 17.

Toutes les grandeurs mesurées le sont avantageusement avec un échantillonnage dt (i.e. toutes les « dt » secondes) avec dt très petit devant le temps caractéristique des mouvements de l'engin 1, typiquement 20-200 ms.

On comprendra que l'engin 1 peut continuer à se localiser malgré la perte d'un capteur.

### Procédé de localisation

L'invention concerne un procédé de localisation pour l'engin 1 évoluant le long de la paroi 20a, 20b verticale.

D'une manière particulièrement avantageuse, le procédé de localisation comprend le positionnement selon trois axes :
- La position suivant l'axe transversal X se fait en fonction de mesures d'une distance entre l'engin 1 et la paroi 20a, 20b fournie par au moins un capteur de distance transversale 15a, 15b de l'engin 1.
- La position suivant l'axe longitudinal Y en fonction de mesures d'une distance entre l'engin 1 et une borne fixe 21 fournie par au moins un capteur de distance longitudinale 16 de l'engin 1.
- La position suivant l'axe vertical Z se fait en fonction de mesures d'altitude fournie par les moyens de mesure d'altitude 13, 14 de l'engin 1.

Il s'agit là d'une disposition particulièrement avantageuse de l'invention. En effet, l'invention procède à un changement de paradigme en s'affranchissant d'un calcul de déplacement relatif, où la localisation est obtenue à chaque instant en estimant le mouvement effectué depuis la précédente localisation, et qui est naturellement sujette à un phénomène de dérive induit par des accumulations d'erreurs. Dans le cas présent la localisation est fournie dans un repère lié à la paroi 20a, 20b, qui représente un élément tangible, fiable et sensiblement immobile par rapport à l'engin 1. Il est à noter que ce repère est particulièrement simple étant donné que la paroi 20a, 20b présente une géométrie connue qui ne nécessite pas de cartographie précise. Aussi, l'utilisation des différents capteurs, qui peuvent être de types différents, est découplée suivant chacun des axes du repère : chaque capteur permet de recaler la localisation en apportant une information selon un (ou plusieurs) axe(s) du repère, indépendamment des autres capteurs.

Par ailleurs, contrairement aux dispositifs connus qui s'appuient sur une estimation de déplacement relatif de l'engin 1, ici, il n'y pas de problème d'initialisation, la localisation de l'engin 1 étant auto-initialisée suivant chaque axe en mesurant sa distance par rapport à la paroi 20a, 20b (pour l'axe X), sa distance par rapport à la borne 21 (pour l'axe Y) et sa distance au sol et/ ou au plafond 20c (pour l'axe Z).

D'une manière particulièrement avantageuse, il suffit de déposer de manière arbitraire une borne 21 ainsi que l'engin 1 à proximité de la paroi pour que l'engin 1 s'auto-initialise.

En d'autres termes, le procédé selon l'invention permet de s'affranchir des défaillances liées à une stratégie de localisation qui s'appuie de manière exclusive sur l'estimation de déplacement relatif de l'engin 1. En l'espèce, la localisation est relative à des objets fixes : la paroi 20a, 20b, le sol et/ ou le plafond 20c et une ou plusieurs bornes fixes 21. Ainsi, l'invention propose un procédé de localisation simplifié, minimaliste, par rapport aux procédés traditionnels, tout en étant plus fiable dans le contexte de la localisation d'un engin évoluant à proximité d'une paroi. En effet, le procédé selon l'invention offre une localisation fiable, dans lequel la localisation sur l'axe Y peut se baser uniquement sur une mesure de distance par rapport à une borne, la localisation sur l'axe X peut se baser uniquement sur une mesure de distance par rapport à la paroi, et dans le cas d'un engin volant, la localisation sur l'axe Z peut se baser uniquement sur une mesure de distance par rapport au sol.

En outre, la détermination d'une orientation autour de l'axe vertical est réalisée en comparant la mesure de distance par rapport à la paroi 20a, 20b, d'aux moins deux capteurs de distance 15a, 15b (disposés du même côté) de l'engin 1.

Il s'agit là d'une mesure particulièrement avantageuse de l'invention.

En effet, si l'engin 1 est orienté de manière parallèle à la paroi 20a, 20b, les deux capteurs 15a ou 15b mesurent une même distance. Sinon, un écart de mesures permet de déterminer un décalage d'orientation autour de l'axe Z. Cette disposition particulièrement simple est permise par l'utilisation avantageuse d'un repère de Frenet lié à la paroi 20a, 20b. Il est à noter que, pour augmenter encore la précision et la fiabilité du calcul d'orientation autour de l'axe vertical, on peut fusionner les données de la centrale inertielle 11 de l'engin 1 avec les données de distance par rapport à la paroi 20a, 20b. La fusion peut s'effectuer à l'aide d'un filtre estimateur d'état (du type filtre de Kalman), pour calculer l'orientation autour de l'axe Z à partir des différentes données prélevées.

Tel que cela a été décrit précédemment, la mesure de distance sur l'axe transversal X peut être réalisée par des sonars embarqués dans l'engin 1.

Les sonars constituent un choix particulièrement adapté pour réaliser des mesures de distance par rapport à une paroi 20a, 20b qui, dans le cas d'un entrepôt logistique, peut présenter des irrégularités, des évidements et être constituées d'éléments pouvant perturber un rayonnement magnétique. A nouveau, pour augmenter encore la précision et la robustesse du positionnement, on peut fusionner les données de la centrale inertielle 11 de l'engin 1 et/ou les données visuelles fournies par l'éventuel capteur de flux optique 17 avec les données des sonars. Cette disposition permet aussi d'apporter une redondance d'information en cas de disfonctionnement d'un capteur. La fusion des données permet de combiner les données proprioceptives de la centrale inertielle 11 avec les données extéroceptives des sonars et/ou du capteur de flux optique 17. La fusion peut s'effectuer à l'aide d'un filtre estimateur d'état (du type filtre de Kalman), pour calculer la position et la vitesse sur l'axe X à partir des différentes données prélevées.

De même, le positionnement selon l'axe vertical Z est effectué avec le capteur de distance au sol et/ou au plafond 20c et/ou en utilisant un baromètre intégré à l'engin 1. A nouveau, pour augmenter encore la fiabilité du positionnement selon l'axe vertical Z, on peut aussi utiliser, de manière redondante, les données de la centrale inertielle 11 de l'engin 1 et utiliser un filtre estimateur d'état pour calculer la position et la vitesse sur l'axe Z à partir des différentes données prélevées.

La position selon l'axe longitudinal Y peut être mesurée au moyen du capteur 16, notamment un capteur ultra large bande. Selon une disposition particulière, ce capteur communique avec la borne 21. En outre, il est possible d'utiliser des amers visuels (passifs tels que des motifs ou actifs tels que des dispositifs « Li-Fi » de communication via une onde lumineuse) pour enrichir le positionnement longitudinal. On comprend qu'une seule borne 21 peut suffire à déterminer la position selon l'axe longitudinal Y, ce qui contraste avec les techniques connues de localisation par bornes, qui impliquent au moins trois bornes et nécessitent une triangulation complexe.

A nouveau, pour augmenter encore la précision et la robustesse du positionnement selon l'axe longitudinal Y, on peut fusionner les données de la centrale inertielle 11 de l'engin 1, et/ou les données visuelles fournies par l'éventuel capteur de flux optique 17 avec les données du capteur 16. La fusion des données permet de combiner les données proprioceptives de la centrale inertielle 11 avec les données extéroceptives des capteurs 16 et 17. La fusion peut s'effectuer à l'aide d'un filtre estimateur d'état (du type filtre de Kalman, pour calculer la position et la vitesse sur l'axe Y à partir des différentes données prélevées.

D'une manière particulièrement avantageuse, il est possible de positionner l'engin 1 par rapport à une deuxième paroi 20a, 20b, en utilisant les capteurs de distance transversale 15b supplémentaires. Tel que décrit précédemment, selon cette disposition, l'engin 1 présente au moins deux capteurs de distance transversale 15a le long d'un premier flanc et un autre capteur de distance transversale 15b le long d'un deuxième flanc opposé au premier flanc. Cette disposition permet avantageusement à l'engin 1 de se positionner par rapport aux deux parois 20a et 20b d'une allée d'un entrepôt logistique.

### Procédé de navigation

L'invention concerne aussi un procédé de navigation qui s'appuie sur le procédé de localisation, tel que schématisé sur la figure 3. Dans un premier temps on acquiert la localisation de l'engin 1. Puis, en fonction d'une consigne de position, une commande est envoyée aux actionneurs de l'engin. De manière cyclique cette boucle d'asservissement permet de réguler la position du drone de sorte qu'il respecte les consignes de positions qui lui sont envoyées.

D'une manière particulièrement avantageuse, le mouvement désiré de l'engin peut être modélisé par une série de translations et peut ainsi être transmis sous forme d'un ensemble de consignes de position.

## Revendications

1. Procédé de localisation pour un engin (1) évoluant à proximité d'une paroi (20a, 20b), un repère de localisation (X, Y, Z), définit au point de projection de l'engin (1) sur la paroi (20a, 20b) comprenant un axe longitudinal (Y) horizontal et tangent à la paroi (20a, 20b), un axe vertical (Z) et un axe transversal (X) étant défini de sorte que le repère de localisation (X, Y, Z) soit orthonormé direct, le procédé étant **caractérisé en ce qu'**il comprend :
- la définition du repère de localisation (X, Y, Z) de l'engin (1) comme un repère glissant, dit repère de Frenet, au point de projection de l'engin (1) sur la paroi (20a, 20b),
- la localisation selon l'axe transversal (X) du repère de localisation (X, Y, Z) en mesurant une distance entre l'engin (1) et la paroi (20a, 20b) fournie par au moins un capteur de distance transversale (15a, 15b) de l'engin (1),
- la localisation selon l'axe longitudinal (Y) du repère de localisation (X, Y, Z) en mesurant une distance entre l'engin (1) et une borne fixe (21) fournie par au moins un capteur de distance longitudinale (16) de l'engin (1), et
- le déplacement du repère de localisation (X, Y, Z) le long de la paroi (20a, 20b) en fonction des mouvements de l'engin (1), de sorte que localement, l'engin (1) est toujours normal à l'axe transversal (X).

2. Procédé de localisation selon la revendication 1, comprenant en outre la localisation selon l'axe vertical (Z) en fonction de mesures d'altitude fournie par des moyens de mesure d'altitude (13, 14) de l'engin (1) et / ou des mesures de distance verticales avec le plafond fournies par des moyens de mesure de distance verticale.

3. Procédé de localisation selon l'une des revendications 1 ou 2, comprenant en outre la détermination d'une orientation de l'engin (1) relativement à la paroi (20a, 20b) selon l'axe vertical (Z) en comparant les mesures de distance entre l'engin (1) et la paroi (20a, 20b) fournis par au moins deux mesures de distance transversale (15a, 15b) de l'engin (1) obtenues à des positions différentes ou selon des orientations différentes.

4. Procédé de localisation selon l'une des revendications 1 à 3, dans lequel chaque mesure de distance transversale (15a, 15b) est obtenue à l'aide d'un sonar ou d'un laser ou d'une caméra de profondeur.

5. Procédé de localisation selon l'une des revendications 1 à 4, dans lequel ledit au moins un capteur de distance longitudinale (16) est un capteur ultra large bande ou un système de mesure de temps de vol communiquant avec ladite borne fixe (21).

6. Procédé de localisation selon l'une des revendications 2 à 5, dans lequel les moyens de mesure d'altitude (13, 14) de l'engin (1) comprennent au moins un capteur de distance verticale (13) mesurant la distance entre l'engin (1) et le sol et/ le plafond, et/ou un baromètre (14).

7. Procédé de localisation selon l'une des revendications 2 à 6, dans lequel la localisation selon un axe parmi l'axe transversal (X), l'axe longitudinal (Y) ou l'axe vertical (Z) est également en fonction de données inertielles fournies par une centrale inertielle (11) de l'engin (1).

8. Procédé de localisation selon l'une des revendications 2 à 7, dans lequel la localisation suivant une paire d'axes parmi l'axe transversal (X), l'axe longitudinal (Y) ou l'axe vertical (Z) est également en fonction de données visuelles fournies par une caméra (17) de l'engin (1), de type capteur de flux optique.

9. Procédé de localisation selon l'une des revendications 1 à 8, dans lequel l'engin (1) évolue à proximité d'au moins deux parois (20a, 20b) en vis à vis dont une première paroi (20a) et une deuxième paroi (20b), la localisation selon l'axe transversal (X) étant en fonction de mesures de distance entre l'engin (1) et la première paroi (20a) fournies par au moins un premier capteur de distance transversale (15a) de l'engin (1), et / ou de mesures de distance entre l'engin (1) et la deuxième paroi (20b) fournies par au moins un deuxième capteur de distance transversale (15b) de l'engin (1).

10. Procédé de localisation selon l'une des revendications 1 ou 2, dans lequel l'engin (1) évolue sous une paroi (20c) en vis-à-vis d'un sol, formant un plafond, la localisation selon l'axe vertical (Z) étant en fonction de mesures d'altitude fournie par des moyens de mesure d'altitude (13, 14) de l'engin (1) et / ou des mesures de distance verticales avec le plafond (20c) fournies par des moyens de mesure de distance verticale.

11. Procédé de navigation pour un engin (1) **caractérisé en ce qu'**il comprend la localisation de l'engin (1) selon l'une des revendication 1 à 10, et la génération d'une commande de déplacement de l'engin (1).

12. Procédé de navigation selon la revendication 11, dans lequel la localisation est selon la revendication 3, ladite commande de déplacement comprenant une correction d'orientation de l'engin (1) pour avoir uniquement des déplacements en translation.

13. Engin (1) comprenant au moins un capteur de distance transversale (15a, 15b), au moins un capteur de distance longitudinale (16) et des moyens de calcul adapté pour mettre en œuvre un procédé selon l'une des revendications 1 à 12.

14. Engin (1) selon la revendication 13, étant choisi parmi un drone volant, un véhicule mobile à roues, ou un engin mobile flottant.

15. Produit programme d'ordinateur comprenant des instructions de code pour l'exécution d'un procédé de localisation selon l'une des revendications 1 à 10 et/ou l'exécution d'un procédé de navigation selon l'une des revendications 11 à 12, pour permettre la localisation et/ou la navigation d'un engin lorsque le programme est exécuté sur un ordinateur.

16. Moyen de stockage lisible par un équipement informatique sur lequel un produit programme d'ordinateur comprend des instructions de code pour l'exécution d'un procédé de localisation selon l'une des revendications 1 à 10 et/ou l'exécution d'un procédé de navigation selon l'une des revendications 11 à 12.

## Patentansprüche

1. Lokalisierungsverfahren für ein Fahrzeug (1), das sich in der Nähe einer Wand (20a, 20b) bewegt, wobei ein Ortsbezugssystem (X, Y, Z), das am Projektionspunkt des Fahrzeugs (1) auf die Wand (20a, 20b) definiert ist und eine Längsachse (Y), die horizontal und tangential zur Wand (20a, 20b) verläuft, eine vertikale Achse (Z) und eine Querachse (X) umfasst, das so definiert ist, dass das Ortsbezugssystem (X, Y, Z) direkt orthonormal ist, wobei das Verfahren **dadurch gekennzeichnet ist, dass** es umfasst:
- die Definition des Ortsbezugssystems (X, Y, Z) des Fahrzeugs (1) als ein gleitendes Bezugssystem, genannt Frenet-Bezugssystem, am Projektionspunkt des Fahrzeugs (1) auf die Wand (20a, 20b),
- die Lokalisierung entlang der Querachse (X) des Ortsbezugssystems (X, Y, Z) durch Messen eines Abstands zwischen dem Fahrzeug (1) und der Wand (20a, 20b), der von mindestens einem Sensor für den Querabstand (15a, 15b) des Fahrzeugs (1) geliefert wird,
- die Lokalisierung entlang der Längsachse (Y) des Ortsbezugssystems (X, Y, Z) durch Messen eines Abstands zwischen dem Fahrzeug (1) und einer festen Bake (21), der von mindestens einem Sensor für den Längsabstand (16) des Fahrzeugs (1) geliefert wird, und
- die Verschiebung des Ortsbezugssystems (X, Y, Z) entlang der Wand (20a, 20b) in Abhängigkeit von den Bewegungen des Fahrzeugs (1), so dass das Fahrzeug (1) lokal immer normal zur Querachse (X) ist.

2. Lokalisierungsverfahren nach Anspruch 1, ferner umfassend die Lokalisierung entlang der vertikalen Achse (Z) in Abhängigkeit von Höhenmessungen, die von Höhenmessmitteln (13, 14) des Fahrzeugs (1) geliefert werden, und/oder von Messungen des vertikalen Abstands zur Decke, die von Mitteln zur Messung des vertikalen Abstands geliefert werden.

3. Lokalisierungsverfahren nach einem der Ansprüche 1 oder 2, ferner umfassend die Bestimmung einer Orientierung des Fahrzeugs (1) relativ zur Wand (20a, 20b) entlang der vertikalen Achse (Z) durch Vergleichen der Abstandsmessungen zwischen dem Fahrzeug (1) und der Wand (20a, 20b), die durch mindestens zwei Messungen des Querabstands (15a, 15b) des Fahrzeugs (1) erhalten wurden, die an verschiedenen Positionen oder nach verschiedenen Orientierungen durchgeführt wurden.

4. Lokalisierungsverfahren nach einem der Ansprüche 1 bis 3, wobei jede Messung des Querabstands (15a, 15b) mit Hilfe eines Sonars oder eines Lasers oder einer Tiefenkamera erhalten wird.

5. Lokalisierungsverfahren nach einem der Ansprüche 1 bis 4, wobei der mindestens ein Sensor für den Längsabstand (16) ein Ultrabreitbandsensor oder ein Flugzeitmesssystem ist, der/das mit der festen Bake (21) kommuniziert.

6. Lokalisierungsverfahren nach einem der Ansprüche 2 bis 5, wobei die Höhenmessmittel (13, 14) des Fahrzeugs (1) mindestens einen Sensor für den vertikalen Abstand (13), der den Abstand zwischen dem Fahrzeug (1) und dem Boden und/ der Decke misst, und/oder ein Barometer (14) umfassen.

7. Lokalisierungsverfahren nach einem der Ansprüche 2 bis 6, wobei die Lokalisierung entlang einer Achse unter der Querachse (X), der Längsachse (Y) oder der Vertikalachse (Z) auch in Abhängigkeit von Trägheitsdaten erfolgt, die von einer Trägheitsmesseinheit (11) des Fahrzeugs (1) geliefert werden.

8. Lokalisierungsverfahren nach einem der Ansprüche 2 bis 7, wobei die Lokalisierung entlang eines Achsenpaars unter der Querachse (X), der Längsachse (Y) oder der Vertikalachse (Z) auch in Abhängigkeit von visuellen Daten erfolgt, die von einer Kamera (17) des Fahrzeugs (1) vom Typ Sensor für optischen Fluss geliefert werden.

9. Lokalisierungsverfahren nach einem der Ansprüche 1 bis 8, wobei das Fahrzeug (1) sich in der Nähe von mindestens zwei einander gegenüberliegenden Wänden (20a, 20b) bewegt, von denen eine eine erste Wand (20a) und eine eine zweite Wand (20b) ist, wobei die Lokalisierung entlang der Querachse (X) in Abhängigkeit von Abstandsmessungen zwischen dem Fahrzeug (1) und der ersten Wand (20a), die von mindestens einem ersten Sensor für den Querabstand (15a) des Fahrzeugs (1) geliefert werden, und/oder von Abstandsmessungen zwischen dem Fahrzeug (1) und der zweiten Wand (20b), die von mindestens einem zweiten Sensor für den Querabstand (15b) des Fahrzeugs (1) geliefert werden, erfolgt.

10. Lokalisierungsverfahren nach einem der Ansprüche 1 oder 2, wobei das Fahrzeug (1) sich unter einer Wand (20c) bewegt, die einem Boden gegenüberliegt und eine Decke bildet, wobei die Lokalisierung entlang der vertikalen Achse (Z) in Abhängigkeit von Höhenmessungen, die von Höhenmessmitteln (13, 14) des Fahrzeugs (1) geliefert werden, und/oder von Messungen des vertikalen Abstands zur Decke (20c), die von Mitteln zur Messung des vertikalen Abstands geliefert werden, erfolgt.

11. Navigationsverfahren für ein Fahrzeug (1), **dadurch gekennzeichnet, dass** es die Lokalisierung des Fahrzeugs (1) nach einem der Ansprüche 1 bis 10 und die Erzeugung eines Bewegungsbefehls für das Fahrzeug (1) umfasst.

12. Navigationsverfahren nach Anspruch 11, wobei die Lokalisierung nach Anspruch 3 erfolgt, wobei der Bewegungsbefehl eine Orientierungskorrektur des Fahrzeugs (1) umfasst, um ausschließlich translatorische Bewegungen zu haben.

13. Fahrzeug (1), umfassend mindestens einen Sensor für den Querabstand (15a, 15b), mindestens einen Sensor für den Längsabstand (16) und Berechnungsmittel, die dafür ausgelegt sind, ein Verfahren nach einem der Ansprüche 1 bis 12 durchzuführen.

14. Fahrzeug (1) nach Anspruch 13, das unten einer fliegenden Drohne, einem mobilen Fahrzeug auf Rädern oder einem schwimmenden mobilen Fahrzeug ausgewählt ist.

15. Computerprogrammprodukt, umfassend Codeanweisungen für die Ausführung eines Lokalisierungsverfahrens nach einem der Ansprüche 1 bis 10 und/oder die Ausführung eines Navigationsverfahrens nach einem der Ansprüche 11 bis 12, um die Lokalisierung und/oder die Navigation eines Fahrzeugs zu ermöglichen, wenn das Programm auf einem Computer ausgeführt wird.

16. Computerlesbares Speichermedium, auf dem ein Computerprogrammprodukt Codeanweisungen für die Ausführung eines Lokalisierungsverfahrens nach einem der Ansprüche 1 bis 10 und/oder die Ausführung eines Navigationsverfahrens nach einem der Ansprüche 11 bis 12 umfasst.

## Claims

1. A localization method for a craft (1) moving in the vicinity of a wall (20a, 20b), a location frame of reference (X, Y, Z), defined at the projection point of the craft (1) on the wall (20a, 20b) comprising a longitudinal axis (Y) that is horizontal and tangent to the wall (20a, 20b), a vertical axis (Z) and a transverse axis (X) being defined such that the location frame of reference (X, Y, Z) is direct orthonormal, the method being **characterized in that** it comprises:
- the definition of the location frame of reference (X, Y, Z) of the craft (1) as a sliding frame of reference, called Frenet frame, at the projection point of the craft (1) on the wall (20a, 20b),
- the localization along the transverse axis (X) of the location frame of reference (X, Y, Z) by measuring a distance between the craft (1) and the wall (20a, 20b) provided by at least one transverse distance sensor (15a, 15b) of the craft (1),
- the localization along the longitudinal axis (Y) of the location frame of reference (X, Y, Z) by measuring a distance between the craft (1) and a fixed beacon (21) provided by at least one longitudinal distance sensor (16) of the craft (1), and
- the displacement of the location frame of reference (X, Y, Z) along the wall (20a, 20b) as a function of the movements of the craft (1), such that locally, the craft (1) is always normal to the transverse axis (X).

2. The localization method according to claim 1, further comprising the localization along the vertical axis (Z) as a function of altitude measurements provided by altitude measurement means (13, 14) of the craft (1) and/or of vertical distance measurements with the ceiling provided by vertical distance measurement means.

3. The localization method according to one of claims 1 or 2, further comprising the determination of an orientation of the craft (1) relative to the wall (20a, 20b) along the vertical axis (Z) by comparing the distance measurements between the craft (1) and the wall (20a, 20b) provided by at least two transverse distance measurements (15a, 15b) of the craft (1) obtained at different positions or according to different orientations.

4. The localization method according to one of claims 1 to 3, in which each transverse distance measurement (15a, 15b) is obtained by means of a sonar or a laser or a depth camera.

5. The localization method according to one of claims 1 to 4, in which said at least one longitudinal distance sensor (16) is an ultra-wideband sensor or a time-of-flight measurement system communicating with said fixed beacon (21).

6. The localization method according to one of claims 2 to 5, in which the altitude measurement means (13, 14) of the craft (1) comprise at least one vertical distance sensor (13) measuring the distance between the craft (1) and the ground and/or the ceiling, and/or a barometer (14).

7. The localization method according to one of claims 2 to 6, in which the localization along an axis among the transverse axis (X), the longitudinal axis (Y) or the vertical axis (Z) is also a function of inertial data provided by an inertial measurement unit (11) of the craft (1).

8. The localization method according to one of claims 2 to 7, in which the localization along a pair of axes among the transverse axis (X), the longitudinal axis (Y) or the vertical axis (Z) is also a function of visual data provided by a camera (17) of the craft (1), of the optical flow sensor type.

9. The localization method according to one of claims 1 to 8, in which the craft (1) moves in the vicinity of at least two walls (20a, 20b) facing each other, one of which is a first wall (20a) and one is a second wall (20b), the localization along the transverse axis (X) being a function of distance measurements between the craft (1) and the first wall (20a) provided by at least one first transverse distance sensor (15a) of the craft (1), and/or of distance measurements between the craft (1) and the second wall (20b) provided by at least one second transverse distance sensor (15b) of the craft (1).

10. The localization method according to one of claims 1 or 2, in which the craft (1) moves under a wall (20c) facing a ground, forming a ceiling, the localization along the vertical axis (Z) being a function of altitude measurements provided by altitude measurement means (13, 14) of the craft (1) and/or of vertical distance measurements with the ceiling (20c) provided by vertical distance measurement means.

11. A navigation method for a craft (1), **characterized in that** it comprises the localization of the craft (1) according to one of claims 1 to 10, and the generation of a displacement command for the craft (1).

12. The navigation method according to claim 11, in which the localization is according to claim 3, said displacement command comprising an orientation correction of the craft (1) in order to have only translational displacements.

13. A craft (1) comprising at least one transverse distance sensor (15a, 15b), at least one longitudinal distance sensor (16) and calculation means adapted to implement a method according to one of claims 1 to 12.

14. The craft (1) according to claim 13, being chosen from a flying drone, a wheeled mobile vehicle, or a floating mobile craft.

15. A computer program product comprising code instructions for the execution of a localization method according to one of claims 1 to 10 and/or the execution of a navigation method according to one of claims 11 to 12, to allow the localization and/or navigation of a craft when the program is executed on a computer.

16. A computer-readable storage medium on which a computer program product comprises code instructions for the execution of a localization method according to one of claims 1 to 10 and/or the execution of a navigation method according to one of claims 11 to 12.
